# EUROPEAN PATENT APPLICATION

(11) **EP 2 385 340 A1**
(43) Date of publication of application: **09.11.2011**
(21) Application number: 11380039.5
(22) Date of filing: 29.04.2011
(51) Int. Cl.: G01B 11/14

(54) **Automatic system for quality control and position correction of taped parts**

(30) Priority: 03.05.2010 ES 201030656; 28.04.2011 ES 201130671
(71) Applicant: Airbus Operations, S.L., 28906 Getafe (Madrid) (ES)
(72) Inventor: The designation of the inventor has not yet been filed
(74) Representative: Ungria Lopez, Javier

(57) **Abstract**

A laminated object (4) in carbon fiber has a first taping strip (1), beside which a second taping strip (2) is arranged, leaving between both of them a separation (3).
One light generator block (7) produces a light mark (6) that is applied to the separation (3) area; an image capture block (8) captures the light mark (6), which is analyzed by a processing and control block (10).
If the separation measure (M_{L},M_{R}) between strips (3) is within an accepted tolerance range (T), then the laminating method continues without change. But if the value of the measure (M_{L},M_{R}) is far greater than the tolerance (T) allowed, or it is far less than the tolerance (T) allowed, then signals (S_{R},S_{L}) are generated and sent to the position control (10) to correct the position to the right or to the left, until obtaining a new measure (M_{L},M_{R}) value that meets the allowed tolerance (T).

## Description

### OBJECT OF THE INVENTION

The present invention, as expressed in the title of this specification, relates to an automatic system for quality control in taped pieces the main purpose of which is to provide automatic detection of defects and provide data for carrying out necessary actions to correct said defects, such as the so-called overlap/gap, which can occur during a taping of an object, especially that made in carbon fiber parts for laminate material with several layers, of those which are used in various components of the aircraft industry. In addition to the aforementioned detection, the system of the invention allows control of the taping, thanks to a connection with the automatic taping machine being used. The system sends to the machine control actual position data of the strip being taped. The control uses this data to correct the position in which the strip is being placed in case the deviation is outside the allowed tolerance. All of this very significantly optimizes the time taken to complete a right taping, because in the current state of the art significantly elevated times are used in the visual check of the taping of the laminate, layer by layer and requiring a skilled operator.

With the system of the invention detecting if the strips have been positioned correctly or incorrectly while taping and providing data for correcting the same is enabled, allowing greatly increasing productivity in the manufacture of the aforementioned parts of carbon fibers, since their verification is not necessary and placing the layer correctly without having to repeat the work later is further ensured.

The system of the invention can be used for both parts of curved surface and for parts of flat surface, being able to be combined with existing taping machines such as automatic taping machines as well as taping machines that could be developed specifically for the system of the invention.

The invention is particularly applicable to parts belonging to: aircraft structures and control (such as aerofoil coatings, stringers, ribs, fittings); spacecrafts, marine and land vehicles, and machinery and equipment of an industrial nature. Furthermore, the invention can be integrated into manufacturing processes such as: composite material laminating, composite material cutting, hot forming of composite material, handling and positioning of parts and tools, and autoclaved. In addition, it is an object of the invention to facilitate the implementation of the corresponding system for taped parts the materials of which can be composed of different resins and different types of fibers such as: fiberglass, carbon fiber, kevlar, boron fiber, epoxy resin, thermoplastic resin and other thermostable resins.

### BACKGROUND OF THE INVENTION

It is common knowledge that the aircraft industry requires structures that, on the one hand, support the loads to which they are subjected in order to meet high standards of strength and stiffness, and on the other hand are as light as possible. A consequence of these requirements is the increasingly widespread use of composite materials in primary structures, since by conveniently applying said composite materials a significant weight savings compared to designs with metallic materials can be achieved.

Integrated structures have proven very efficient in this sense, talking about integrated structure where the various structural elements are manufactured at one time, which implies an additional advantage of using composite materials since due to their constitution provided on separate layers can be stacked in various shapes and orientations desired, giving the possibility of mainly integrating the structure, which also often leads to cost savings which is essential when competing in the market and which is determined by having fewer individual parts to be assembled.

The above structures are usually composed of coating and stringers; the above mentioned coating being longitudinally stiffened with the aforementioned stringers to reduce its thickness and being competitive in weight; so that the structure currently used consists of a coating with co-bonded, co-cured, integrated stringers.

The set of coating plus stringers can be manufactured in a single process by means of which the coating with the stringers in one piece is obtained, following a manufacturing process that is usually the following:
- First of all the layers of composite material are stacked on a flat base, using an automatic taping method without any quality control other than the verification and correction, if necessary, by the machine operators. It is here where the present invention has its main application, and for which the same has been developed.
- Then the stack obtained in the previous stage is bent to form the parts as desired. Said bending can be done in different ways, for example by applying a cycle of temperature and vacuum molding the stack with the geometry required by the relevant tool, the interior geometry of which is copied.
- Independently, a laminating of the base skin is carried out consisting of overlapping layers of composite material consisting of overlapping layers of composite material in a prepreg state, so that the fiber orientation meets the structural requirements of the part; placing the necessary reinforcement between the different layers of laminate for this. The distribution of layers must be such that the laminating and forming without causing wrinkles or distortions of the fiber are allowed, as well as once the part has been cured not having permanent deformation due to thermal stresses.
- Then, the different elements are placed in the curing tool on the skin, being possible that at this stage it may be necessary to introduce "rowings" (strips of unidirectional fiber that should be made of the same material as the one used in the stacks or a compatible material) to avoid gaps and/or accumulations of resin, thereby ensuring optimum bonding.
- Next, curing of the entire structure is carried out by applying a single cycle of pressure and temperature, with the help of the appropriate tooling system that can be both inside and outside the vacuum bag which surrounds the structure during this process, allowing the proper compaction of all areas of the cited structure, and said structure can be co-cured (if all the parts such as base coating, stringers and others are fresh), co-bonded (for example, if the stringers are previously cured) or glued (all elements previously cured).

In the current state of the art, there are problems relating to the fact that so far all laminates have to be reviewed by an operator layer by layer to make sure that before placing the next layer of laminate there has not been any problem at the taping thereof. The current quality standards define that the tolerance in regard to the distance on the taping between a strip and the following must be between 0 and 2 mm; so that if a strip overlaps the annexed thereto or there are more than 2 mm of distance between them it has to be re-taped to be within the appropriate distance. Until recently, the chambers of the existing artificial vision systems did not allow sufficient resolution to detect changes so small, so that systems similar to that of the present invention were not feasible, and further there were problems relating to changes in ambient lighting such as lighting changes, shadows or other which substantially affected the artificial vision, determining excessive errors in the corresponding system. However, the image capturing and lighting means made possible by the current state of the art allow a system like the one of the present invention to operate with high efficiency.

### DESCRIPTION OF THE INVENTION

The present invention, as expressed in the title of this specification, relates to an automatic system for quality control in taped parts of particular application in the detection of errors in taping of carbon fiber parts for laminate material with several layers, such as those used in various components of the aircraft industry; where the object to be taped is equipped with at least one first taping strip beside which a second taping strip is arranged, leaving a separation between strips; the corresponding taping can be carried out by an automatic taping machine.

Innovatively, according to the invention, the system has at least one light mark generator block that produces a light mark that is applied to the separation area between two even strips and on adjacent parts to said area in each of those even strips, so that this light mark, which would have the shape of a seamless segment applied on a smooth surface, has a rectangular pulse shape when projected onto the strips and their separation area, by virtue of the thickness of said strips; the referenced light mark projected onto the strips and their separation area being collected by an image capture block connected to a processing and control block analyzing the mark, determining whether the separation between strips is at a preset allowed range, between 0.7 mm and 1.3 mm, by processing the image of the referenced rectangular pulse, said processing and control block further connecting to the machine control system. With these data, the machine corrects its position to allow correct positioning of the carbon fiber tape at all times.

According to the preferred embodiment of the invention, the aforementioned processing and control block, in addition to connecting with the image capture block and the alarm block, is connected to the light mark generator block, with a control means of the automatic taping machine to correct taping position at all times and with an anti-interference lighting device that prevents potential system failures caused by lighting interference caused by brightness variations in the environment, by providing a regular lighting in the area where the light mark is projected; all this enabling a real-time dynamic control over the compliance with said allowed range, in every moment of the taping of the corresponding object.

Moreover, in this preferred embodiment of the invention, the aforementioned image capture block is an artificial vision equipment that includes two monochrome cameras with obturator and laser device, while the light mark generator block is a LED projector that generates a light beam with straight linear segment-shaped section.

In that preferred embodiment of the invention, the aforementioned preset range of quality allowed is between the values of 0 and 2 mm, so as to allow the adjacency between edges of different strips, but not the overlapping thereof or a gap between them higher than 2 mm, so it can be applied to the current regulations in the aircraft industry, which was cited in section "Background of the invention" of the present document. To ensure proper quality of the taping the control system corrects the "on line" position if it is outside the range of 0.7 mm and 1.3 mm, so that undoubtedly ensures that the quality limits allowed between 0 and 2 mm are never reached.

With the structure described, the invention has the major advantage that it automatically corrects both problems of both the alignment of material and the positioning of the machine itself. Thanks to this, it is not necessary to devote time to inspect each of the layers once taped, where up to now and because of the state of the art, in the equipment that were used for the manufacture of flat laminates this task could not be automated, and the action of a person was required to perform the verification, also having to stop the corresponding taping machine while performing said not automated verification task, resulting in loss of productivity. However, using the system of the present invention and combining it with the existing automatic manufacturing systems in appropriate settings so that the machine spins and configuration of the part do not affect the measurements made by the system, ensuring that the taping that is being made is totally correct (quality assurance) is achieved as the system checks it at all times and it also allows taping without wasting time (increased productivity).

More concrete advantages of the invention include:
- A great time saving in the taping, because the operator does not have to stop at each layer to ensure that it has been successfully performed.
- An increase in the quality of the laminates, since the system ensures the correct positioning of all strips, thus avoiding human errors.
- Improved ergonomics regarding the operators, since, especially when the taped pieces are very large, it is very difficult to access all areas of the laminate to verify it.
- An improvement in safety regarding the operators, since, at no time they have to access the taping area until the whole taping method is finished.

Next, in order to facilitate a better understanding of this specification and forming an integral part thereof, it is accompanied by a unique figure wherein, by way of illustration and not limitation the object of the invention has been represented.

### BRIEF DESCRIPTION OF THE FIGURE

Figure 1.- Schematically represents by means of a functional block diagram an automatic system for quality control in taped pieces made according to the present invention.
Figures 2, 3. ― Show various flow charts of the correction made in accordance with the measure carried out depending on that said measure is within or outside the expected tolerance.

### DESCRIPTION OF AN EMBODIMENT EXAMPLE OF THE INVENTION

Below a description of an example of the invention making reference to the references of the figure is carried out.

Thus, the automatic system for quality control in taped parts of this example of the invention has special application in the detection of errors in taping carbon fiber parts for laminate material with several layers, such as those used in various components of the aircraft industry.

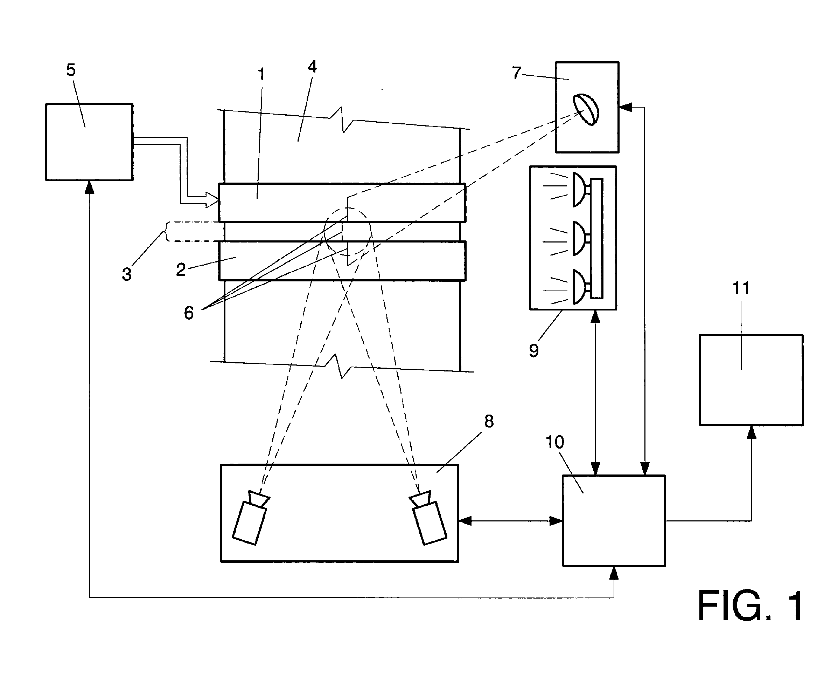

That part or object to be taped 4 is provided with a plurality of even strips, a first taping strip 1 being shown schematically in Figure 1, beside which there is a second taping strip 2, leaving between both of them a separation between strips 3 and performing in this example the taping placing the strips 1 and 2 on the object 4 with an automatic taping machine 5.

The elements described so far 1 to 5 define a state of the art, while the system of the invention as such for this example thereof is defined by the elements 6 to 11 of Figure 1. Thus, the system has a light mark generator block 7 which produces a light mark 6 applied onto the separation area 3 between strips 1 and 2 and which extends over parts adjacent to said area 3 in each of those strips 1 and 2, as shown in Figure 1; visualizing in the same that said mark 6 has a rectangular pulse shape by virtue of the thickness of the strips 1 and 2 and the separation area 3.

The light mark 6 projected onto the strips and its separation area is collected by an image capture block 8 which connects to a processing and control block 10 for analyzing the mark 6 and determining whether the separation 3 is in an allowed range that has been preset.

In the present example, said range is between the values of 0 and 2 mm, so as to allow the adjacency between edges of different strips 1 and 2 but not its overlapping or a gap between them greater than 2 mm, in order to be usable with current regulations in force on parts of aircraft, and this range being able to be obviously preset at other values.

By applying means of image processing to the mark 6 the processing and control block 10 allows verifying that the separation area 3 is at all times of the taping between the above-mentioned values of 0 and 2 mm, and in the case of getting close to failing to keep, by excess or by default, this range, the control system of the machine itself is connected to the system described herein whereby the positioning of the strips is corrected to the right direction so that there is no defect.

So far, this is the basic structure of the invention, but in the present example other elements that complete and improve the system are added. For this, the processing and control block 10, in addition to connecting with the image capture block 8 and the alarm block 11, is connected to the light mark generator block 7 to manage one or more of its parameters, with a control means of the automatic taping machine 5 which also allows the management of various parameters on that machine 5, such as starting, stopping, correcting the position of the taping, adjustments of various types or other; the control and processing block 10 also managing an anti-interference lighting device 9 which provides a regular lighting on the area wherein the light mark 6 is projected to avoid lighting interferences due to brightness variations in the environment, thereby the system of this example of the invention allows real-time dynamic control over compliance with the allowed range for the distance or separation 3 in every moment of the taping of the object 4. The way in which the position is corrected as is being taped in one way or the other is described below.

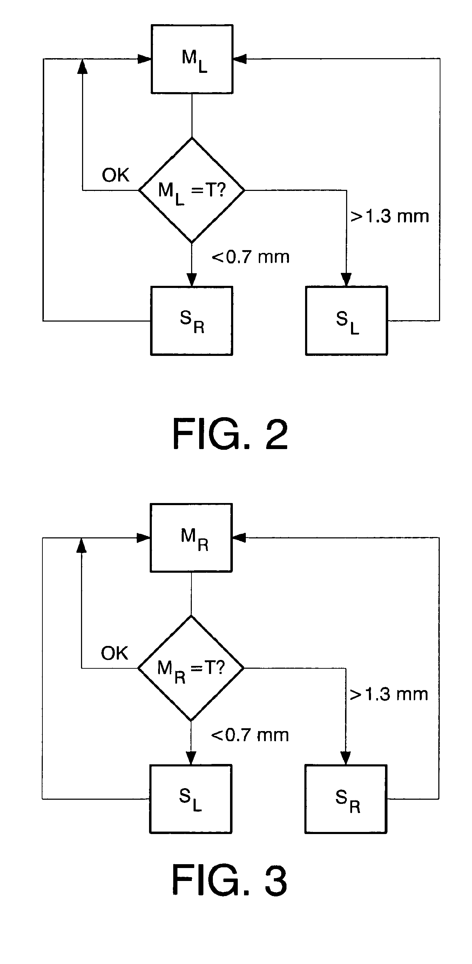

Figure 2 shows a flow chart of the correction made in accordance with the separation measure (3) made between two consecutive strips (1, 2) depending on that said measure is within or outside an expected tolerance range. Specifically, Figure 2 starts from the comparison of the measure between a strip (for example, the element (1) of Figure 1), and that which is on its immediate left (for example, the element (2) of Figure 1). This measure of the separation distance (3) between a strip (1) and the one to its left, strip (2), is denoted as M_{L}; said M_{L} distance is compared with a established tolerance range, T. If the M_{L} measure is within the accepted tolerance range T, the taping method continues without change. In the case that the M_{L} measure is far less than the tolerance allowed and is lower than the set value, e.g. 0.7 mm, an S_{R} signal is generated and sent to the position control to correct the position to the right until obtaining a new M_{L} measure value that meets the allowed tolerance T. In the case that the M_{L} measure is far greater than the tolerance T allowed and is greater than the set value, for example 1.3 mm, an S_{L} signal is generated and sent to the position control to correct the position to the left until obtaining a new M_{L} measure value that meets the allowed tolerance T.

Similarly, Figure 3 shows a flow chart of the correction made based on the measurement made between two consecutive strips (elements (1), (2) in Figure 1), namely, between a given strip (e.g. , the element (2) in Figure 1), and the one that is on its immediate right (for example, the element (1) of Figure 1). In this case, the measure of the separation distance (3) between a strip (2) and the one that is on its right, strip (1), is denoted by M_{R}; said M_{R} distance is compared with a set tolerance range, T. If the M_{R} measure is within the accepted tolerance range T, the taping procedure continues without change. In the case that the M_{R} measure is far less than the tolerance allowed and is lower than the set value, e.g. 0.7 mm, an S_{L} signal is generated and sent to the position control to correct the position to the left until obtaining a new M_{R} measure value that meets the allowed tolerance T. In the case that the M_{R} measure is far greater than the tolerance T allowed and is greater than the set value, for example 1.3 mm, an S_{R} signal is generated and sent to the position control to correct the position to the right until obtaining a new M_{R} measure value that meets the allowed tolerance T.

Mostly specifying the equipment used, it should be noted that the image capture block 8 is an artificial vision equipment that includes two monochrome cameras with obturator and laser device, while the light mark generator block 7 is a LED projector that generates a light beam with straight linear segment-shaped section, the processing and control blocks 10, alarm block 11 and anti-interference lighting block 9 may be standard electronic and computer equipment with known programming means. Finally the measuring system which transmits the distance between the current strip and the one prior to the control system of the machine is specially designed such that the numerical control of each machine is able to interpret these data.

## Claims

1. AUTOMATIC SYSTEM FOR QUALITY CONTROL IN TAPED PARTS, of particular application in the detection of errors in taping of carbon fiber parts for laminate material with several layers, such as those used in various components of the aircraft industry; where the object to be taped (4) is equipped with at least one first taping strip (1) beside which a second taping strip (2) is arranged, leaving between both of them a separation between strips (3); the corresponding taping can be carried out by an automatic taping machine (5), **characterized in that** the system has at least one light mark generator block (7) that produces a light mark (6) that is applied to the separation area (3) between two even strips (1, 2) and on adjacent parts to said area (3) in each of those even strips (1, 2); so that this light mark (6), which would have the shape of a seamless segment applied on a smooth surface, has a rectangular pulse shape when projected onto the strips (1, 2) and their separation area (3), by virtue of the thickness of said strips (1, 2); the referenced light mark (6) projected onto the strips (1, 2) and their separation area (3) being collected by an image capture block (8) connected to a processing and control block (10) analyzing the mark (6), determining whether the separation between strips (3) is at a preset allowed range, by processing the image of the referenced rectangular pulse; said processing and control block (10) further connecting to at least one alarm block (11) that generates a warning signal when said allowed range is breached.

2. AUTOMATIC SYSTEM FOR QUALITY CONTROL IN TAPED PARTS, according to claim 1, **characterized in that** in terms of the separation between strips (3) any possible deviations that may occur during the taping are corrected.

3. AUTOMATIC SYSTEM FOR QUALITY CONTROL IN TAPED PARTS, according to claim 1, **characterized in that** the aforementioned processing and control block (10), in addition to connecting with the image capture block (8) and the alarm block (11), is connected to the light mark generator block (7), with a control means of the automatic taping machine (5) and with an anti-interference lighting device (9) that prevents potential system failures caused by lighting interference caused by brightness variations in the environment, by providing a regular lighting in the area where the light mark (6) is projected; all this enabling a real-time dynamic control over the compliance with said allowed range, in every moment of the taping of the corresponding object (4).

4. AUTOMATIC SYSTEM FOR QUALITY CONTROL IN TAPED PARTS, according to claim 1 or 3, **characterized in that** image capture block (8) is an artificial vision equipment that includes two monochrome cameras with obturator and laser device; while the light mark generator block (7) is a LED projector that generates a light beam with straight linear segment-shaped section.

5. AUTOMATIC SYSTEM FOR QUALITY CONTROL IN TAPED PARTS, according to any one of the preceding claims, **characterized in that** the aforementioned preset range of quality allowed is between the values of 0 and 2 mm, so as to allow the adjacency between edges of different strips (1, 2), but not overlapping thereof or a gap between them higher than 2 mm.

6. AUTOMATIC SYSTEM FOR QUALITY CONTROL IN TAPED PARTS, according to any one of claims 2 to 5, **characterized in that** the measure (M_{L}) of separation between strips (3) is made between a first strip (1) with respect to the strip (2) that is immediately to its left, so that:
a) if the separation measure (M_{L}) between strips (3) is within the accepted tolerance range (T), the taping method continues without change;
b) if the value of the measure (M_{L}) is far less than the tolerance (T) allowed and is lower than the set value, e.g. 0.7 mm, an S_{R} signal is generated and sent to the position control (10) to correct the position to the right until obtaining a new M_{L} measure value that meets the allowed tolerance T;
c) if the measure value (M_{L}) is far greater than the tolerance (T) allowed and is greater than the set value, for example 1.3 mm, an S_{L} signal is generated and sent to the position control (10) to correct the position to the left until obtaining a new M_{L} measure value that meets the allowed tolerance T.

7. AUTOMATIC SYSTEM FOR QUALITY CONTROL IN TAPED PARTS, according to any one of claims 2 to 5, **characterized in that** the measure (M_{R}) of separation between strips (3) is made between a first strip (2) with respect to the strip (1) that is immediately to its right, so that:
a) if the separation measure (M_{R}) between strips (3) is within the accepted tolerance range (T), the taping method continues without change;
b) if the value of the measure (M_{R}) is far less than the tolerance (T) allowed and is lower than the set value, e.g. 0.7 mm, an S_{L} signal is generated and sent to the position control (10) to correct the position to the left until obtaining a new M_{R} measure value that meets the allowed tolerance T;
c) if the measure value (M_{R}) is far greater than the tolerance (T) allowed and is greater than the set value, for example 1.3 mm, an S_{R} signal is generated and sent to the position control (10) to correct the position to the right until obtaining a new M_{R} measure value that meets the allowed tolerance T.
